(19) Europäisches Patentamt
European Patent Office
Office européen des brevets

(11) Veröffentlichungsnummer: **0 243 832 B1**

(12) **EUROPÄISCHE PATENTSCHRIFT**

(45) Veröffentlichungstag der Patentschrift: **02.09.92**

(51) Int. Cl.5: **C08G 18/42**

(21) Anmeldenummer: **87105759.2**

(22) Anmeldetag: **18.04.87**

# (54) Verfahren zur Herstellung von elastischen, kompakten oder zelligen Polyurethan- oder Polyurethan-Polyharnstoff-Form-Körpern.

(30) Priorität: **23.04.86 DE 3613650**

(43) Veröffentlichungstag der Anmeldung:
**04.11.87 Patentblatt 87/45**

(45) Bekanntmachung des Hinweises auf die Patenterteilung:
**02.09.92 Patentblatt 92/36**

(84) Benannte Vertragsstaaten:
**AT BE CH DE ES FR GB IT LI NL SE**

(56) Entgegenhaltungen:
**EP-A- 0 093 335**
**FR-A- 2 133 861**

(73) Patentinhaber: **BASF Aktiengesellschaft**
**Carl-Bosch-Strasse 38**
**W-6700 Ludwigshafen(DE)**

(72) Erfinder: **Werner, Frank, Dr.**
**Erschigweg 9**
**W-6730 Neustadt(DE)**
Erfinder: **Streu, Joachim, Dr.**
**Am Huettenwingert 32**
**W-6706 Wachenheim(DE)**
Erfinder: **Mueller, Herbert, Dr.**
**Carostrasse 53**
**W-6710 Frankenthal(DE)**

**EP 0 243 832 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Herstellung von elastischen, kompakten oder zelligen Polyurethan-- im folgenden abgekürzt PU genannt - oder Polyurethan-Polyharnstoff-- im folgenden abgekürzt PU-PH genannt - Formkörpern nach dem Isocyanat-Polyadditionsverfahren mit Hilfe der Niederdruck- oder Hochdrucktechnik ist bekannt aus zahlreichen Patent- und Literaturpublikationen.

Nach Angaben der DE-AS 11 96 864 (US 3 099 516) werden hierzu Hydroxylgruppen aufweisende Verbindungen und Polyisocyanate in Gegenwart von Treibmitteln und Katalysatoren verschäumt. Bei geeigneter Wahl der Hydroxylgruppen aufweisenden Polyester, Polyether, Polyetherester, Polyesteramide u.a. und organischen Polyisocyanate sowie durch zusätzliche Mitverwendung von Kettenverlängerungsmitteln, wie z.B. Glykolen oder Diaminen, können nach dieser Methode sowohl elastische wie starre Polyurethane sowie alle dazwischen liegenden Modifikationen hergestellt werden.

Die Herstellung von gegebenenfalls zellhaltigen Polyurethan-Elastomeren unter Verwendung von Polyester-polyolen als höhermolekulare Polyhydroxylverbindung ist ebenfalls nicht neu.

Gegebenenfalls zellhaltige Polyurethan-Elastomere werden beispielsweise nach dem Niederdruckverfahren gemäß EP-A-00 17 060 durch Umsetzung von organischen Polyisocyanaten, Polyester-polyolen, erhalten durch Polykondensation von organischen Dicarbonsäuren mit einem Butandiol-1,4-Pentandiol-1,5-Hexandiol-1,6-Gemisch und Kettenverlängerungsmittel hergestellt.

Die Herstellung von gegebenenfalls zellhaltigen, elastischen Formkörpern mit einer geschlossenen Oberflächenschicht aus Polyurethan-Polyharnstoff-Elastomeren nach dem Hochdruckverfahren durch Umsetzung von organischen Polyisocyanaten, Polyhydroxylverbindungen, wie z.B. Polyester-polyolen und aromatischen Di- bzw. Polyaminen, die in ortho-Stellung zur Aminogruppe gegebenenfalls durch Alkylgruppen substituiert sind, als one shot-Systeme nach der Reaktionsspritzgußtechnik wird beispielsweise in der DE-A-26 22 951 (US 4 218 543) beschrieben.

Nachteilig für die Verarbeitung von Polyester-polyolen nach dem Niederdruck- und Hochdruckverfahren zu PU bzw. PU-PH-Formkörpern sind deren hohe Schmelzpunkte von ungefähr 50 °C und höher und im Vergleich zu Polyether-polyolen hohe Viskositäten, die höhere Verarbeitungstemperaturen bedingen sowie eine schlechtere Mischbarkeit mit den anderen Aufbaukomponenten. Nachteilig ist ferner die geringere Hydrolysestabilität der unter Verwendung von Polyester-polyolen als Polyhydroxylverbindung hergestellten PU bzw. PU-PH-Elastomeren.

Die Aufgabe der vorliegenden Erfindung bestand darin, bei Raumtemperatur flüssige und niederviskose Polyester-polyole herzustellen und diese nach dem Niederdruck- oder Hochdruckverfahren zu hydrolysebeständigen, kompakten oder zelligen PU- bzw. PU-PH-Formkörpern, insbesondere Schuhsohlen, mit verbesserten mechanischen Eigenschaften umzusetzen.

Diese Aufgabe konnte überraschenderweise durch die Verwendung von Polyoxytetramethylen-glykol oder deren Gemische mit einem Molekulargewicht oder durchschnittlichen Molekulargewicht von 162 bis 600 als Aufbaukomponente zur Polykondensation von Polyester-polyolen und deren Verarbeitung zu Formkörpern gelöst werden.

Gegenstand der Erfindung ist somit ein Verfahren zur Herstellung von elastischen, kompakten oder vorzugsweise zelligen Polyurethan- oder Polyurethan-Polyharnstoff-Formkörpern durch Umsetzung von

a) organischen Polyisocyanaten,
b) höhermolekularen Polyesterolen,
c) Kettenverlängerungsmitteln und/oder Vernetzern
in Gegenwart von
d) Katalysatoren und gegebenenfalls
e) Treibmitteln
f) Hilfsmitteln und/oder Zusatzstoffen

das dadurch gekennzeichnet ist, daß man als Polyesterole (b) Polyester-diole mit einer Hydroxylzahl von 25 bis 100 und einer Säurezahl kleiner als 2 verwendet, die hergestellt werden durch Polykondensation von organischen Dicarbonsäuren und mindestens einem Polyoxytetramethylen-glykol mit einem Molekulargewicht von 162 bis 600.

Durch die Verwendung von Polyoxytetramethylen-glykol oder -gemischen mit einem durchschnittlichen Molekulargewicht von 162 bis 600 und organischen Dicarbonsäuren zur Polykondensation werden hydrolysebeständige, niedrigviskose Polyester-diole erhalten, die mit den anderen Aufbaukomponenten gut mischbar sind und sich bereits bei Raumtemperatur zu PU-oder PU-PH-Formkörpern mit sehr guter Hydrolysestabilität und guten mechanischen Eigenschaften verarbeiten lassen.

Zu den für das erfindungsgemäße Verfahren verwendbaren Aufbaukomponenten (a) bis (d) und gegebenenfalls (e) und (f) ist folgendes auszuführen:

Als organische Polyisocyanate (a) kommen aliphatische, cycloaliphatische, araliphatische und vorzugsweise aromatische Isocyanate in Frage. Im einzelnen seien beispielhaft genannt: Alkylendiisocyanate mit 4 bis 12 Kohlenstoffatomen im Alkylenrest, wie 1,12-Dodecan-diisocyanat, Tetramethylen-diisocyanat-1,4 und vorzugsweise Hexamethylen-diisocyanat-1,6; cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethyl-cyclohexan (Isophoron-diisocyanat), 2,4- und 2,6-Hexahydrotoluylen-diisocyanat sowie die entsprechenden Isomerengemische, 4,4′-, 2,2′- und 2,4′-Dicyclohexylmethan-diisocyanat sowie die entsprechenden Isomerengemische und vorzugsweise aromatische Di- und Polyisocyanate, wie 4,4′-, 2,4′- und 2,2′-Diisocyanato-diphenylmethan und die entsprechenden Isomerengemische, 2,4- und 2,6-Diisocyanato-toluol und die entsprechenden Isomerengemische, 1,5-Diisocyanato-naphthalin, Polyphenyl-polymethylen-polyisocyanate, 2,4,6-Triisocyanato-toluol und vorzugsweise Gemische aus Diphenylmethan-diisocyanaten und Polyphenyl-polymethylen-polyisocyanaten (Roh-MDI). Die genannten Di- und Polyisocyanate können einzeln oder in Form von Mischungen eingesetzt werden.

Häufig werden auch sogenannte modifizierte mehrwertige Isocyanate, d.h. Produkte, die durch chemische Umsetzung obiger Di- und/oder Polyisocyanate erhalten werden, verwendet. Als modifizierte organische Di- und Polyisocyanate kommen beispielsweise in Betracht: Carbodiimidgruppen aufweisende Polyisocyanate gemäß DE-PS 1 092 007, Allophanatgruppen aufweisende Polyisocyanate, wie sie z.B. in der britischen Patentschrift 994 890, den ausgelegten Unterlagen des belgischen Patents 761 626 und der NL-OS 71 02 524 beschrieben werden, Isocyanuratgruppen aufweisende Polyisocyanate, wie sie z.B. in der DE-PS 1 022 789, 1 222 067 und 1 027 394 sowie den DE-OS 1 929 034 und 2 004 048 beschrieben werden, Urethangruppen aufweisende Polyisocyanate, wie sie z.B. in den ausgelegten Unterlagen des belgischen Patents 752 261 oder der US-PS 3 394 164 beschrieben werden, acylierte Harnstoffgruppen aufweisende Polyisocyanate z.B. gemäß DE-PS 1 230 778, Biuretgruppen aufweisende Polyisocyanate z.B. gemäß DE-PS 1 101 394 und GB-PS 889 050; durch Telomerisationsreaktionen hergestellte Polyisocyanate z.B. entsprechend den ausgelegten Unterlagen des belgischen Patents 723 640, Estergruppen aufweisende Polyisocyanate, wie sie z.B. in der GB-PS 965 474 und 1 072 956, der US-PS 3 567 765 und der DE-PS 1 231 688 genannt werden.

Vorzugsweise kommen jedoch zur Anwendung: urethangruppenhaltige Polyisocyanate, beispielsweise mit niedermolekularen linearen oder verzweigten Alkandiolen, Dialkylenglykolen oder Polyoxyalkylenglykolen mit Molekulargewichten bis 3000 auf Basis von Ethylenoxid, 1,2-Propylenoxid oder deren Gemischen, modifiziertes 4,4'- und/oder 2,4'-Diphenylmethan-diisocyanat oder 2,4- und/oder 2,6-Toluylen-diisocyanat, Carbodiimidgruppen und/oder Isocyanuratringe enthaltende Polyisocyanate, z.B. auf 4,4'-, 2,4'-Diphenylmethan-diisocyanat-, 2,4- und/oder 2,6-Toluylen-diisocyanat-Basis und insbesondere 4,4'-Diphenylmethan-diisocyanat, Mischungen aus 2,4'- und 4,4'-Diphenylmethan-diisocyanat, Toluylen-diisocyanate, Mischungen aus Diphenylmethan-diisocyanaten und Polyphenyl-polymethylen-polyisocyanaten (Roh-MDI) und Gemischen aus Toluylen-diisocyanaten und Roh-MDI.

Als organische Polyisocyanate kommen insbesondere auch Quasiprepolymere mit einem NCO-Gehalt von 15 bis 30 Gew.%, vorzugsweise von 18 bis 23 Gew.%, bezogen auf das Gesamtgewicht, in Betracht, die hergestellt werden durch Umsetzung von 4,4'-Diphenylmethan-diisocyanat mit mindestens einem di- bis trifunktionellen Polyester-polyol, vorzugsweise einem Polyesterdiol, mit einer Hydroxylzahl von 30 bis 300, vorzugsweise von 45 bis 60 oder einer Mischung aus einem Polyesterdiol mit einer Hydroxylzahl von 30 bis 300 und mindestens einem Alkandiol mit 2 bis 12 Kohlenstoffatomen im Alkylenrest.

Die erfindungsgemäß verwendbaren Polyester-diole (b) besitzen Hydroxylzahlen von 25 bis 100, vorzugsweise 40 bis 70 und Säurezahlen kleiner als 2, vorzugsweise von 0,1 bis 1,5 und werden hergestellt durch Polykondensation von organischen Dicarbonsäuren mit 2 bis 15 Kohlenstoffatomen, vorzugsweise aliphatischen Dicarbonsäuren mit 2 bis 12 und insbesondere 4 bis 6 Kohlenstoffatomen und mindestens einem Polyoxytetramethylen-glykol mit einem Molekulargewicht von 162 bis 600, vorzugsweise von 200 bis 300 und insbesondere von 240 bis 280. Die Polyoxytetramethylen-glykole können einzeln eingesetzt werden. Vorzugsweise finden jedoch Polyoxytetramethylen-glykolmischungen mit durchschnittlichen Molekulargewichten in dem genannten Bereich Anwendung. Als Diolkomponente eignen sich jedoch auch Mischungen aus mindestens einem Polyoxytetramethylenglykol und mindestens einem aliphatischen Diol mit 2 bis 12, vorzugsweise 4 bis 6 Kohlenstoffatomen im Alkylenrest und/oder Polyoxyalkylen-glykol aus der Gruppe der Polyoxyethylen-glykole, Polyoxypropylen-glykole und/oder Polyoxypropylen-polyoxyethylen-glykole mit einem Molekulargewicht von 106 bis 1000, vorzugsweise 106 bis 400. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure und Fumarsäure. Die Dicarbonsäuren können dabei sowohl einzeln als auch im Gemisch untereinander verwendet werden.

Anstelle der freien Dicarbonsäuren können auch die entsprechenden Dicarbonsäurederivate, wie z.B.

Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar-und Adipinsäure in Mengenverhältnissen von beispielsweise 20-35:35-50:20-32 Gew.-Teilen, und insbesondere Adipinsäure. Die Polyoxytetramethylen-glykole können nach üblichen Verfahren hergestellt werden. Vorteilhafterweise Anwendung finden jedoch Produkte, die durch kationische Polymerisation von Tetrahydrofuran in Gegenwart von Lewis-Säuren, wie z.B. Antimonpentachlorid, Borfluorid-Etherat u.a. oder Bleicherde als Katalysatoren und Carbonsäureanhydrid, vorzugsweise Acetanhydrid, und gegebenenfalls Alkoholen mit 1 bis 4 Kohlenstoffatomen und anschließende Verseifung der intermediär gebildeten Polyoxytetramethylen-glykoldicarbonsäureester erhalten werden.

Beispiele für Diole und Polyoxyalkylen-glykole mit Molekulargewichten von 106 bis 1000 sind Ethandiol, 1,2- und 1,3-Propandiol, 2,2-Dimethylpropandiol-1,3, 1,4-Butandiol, 1,5-Pentandiol, 1,6-Hexandiol, Polyoxyethylen-glykole, wie z.B. Diethylen-glykol, Triethylen-glykol, Tetraethylen-glykol, Polyoxypropylen-glykole, wie z.B. Dipropylen-glykol und Tripropylen-glykol und Polyoxypropylen-polyoxyethylen-glykole oder deren Gemische.

Vorzugsweise verwendet werden Mischungen aus 1,4-Butandiol, 1,5-Pentandiol und 1,6-Hexandiol und insbesondere 1,4-Butandiol.

Besonders bewährt haben sich und daher vorzugsweise verwendet werden Polyester-diole, die hergestellt werden durch Polykondensation von

10 bis 70 Gew.-Teilen, vorzugsweise 20 bis 50 Gew.-Teilen mindestens einer organischen, vorzugsweise aliphatischen Dicarbonsäure und insbesondere Adipinsäure,

1 bis 90 Gew.-Teilen, vorzugsweise 10 bis 90 Gew.-Teilen mindestens eines Polyoxytetramethylen-glykols mit einem Molekulargewicht von 162 bis 600, vorzugsweise von 200 bis 300 und

0 bis 50 Gew.-Teilen, vorzugsweise 0 bis 30 Gew.-Teilen mindestens eines aliphatischen Diols mit 2 bis 12 Kohlenstoffatomen. insbesondere 1,4-Butandiol, und/oder eines Polyoxyalkylen-glykols aus der Gruppe der Polyoxyethylen-, Polyoxypropylen- oder Polyoxypropylen-polyoxyethylenglykole mit einem Molekulargewicht von 106 bis 1000. und Polyester-diole, hergestellt durch Polykondensation von Adipinsäure und mindestens einem Polyoxytetramethylenglykol mit Molekulargewichten von 200 bis 300 oder einer Mischung aus mindestens einem Polyoxytetramethylen-glykol mit einem Molekulargewicht von 200 bis 300 und Butandiol-1,4.

Die erfindungsgemäß verwendbaren Polyester-diole werden in an sich bekannter Weise durch Polykondensation der Ausgangsstoffe bei Temperaturen von 100 bis 250° C, vorzugsweise von 150 bis 220° C, hergestellt, wobei zweckmäßigerweise in der Endphase der Reaktion unter vermindertem Druck polykondensiert wird. Die Polykondensation kann gegebenenfalls in Gegenwart von Veresterungskatalysatoren, wie z.B. organischen Titan- oder Zinnverbindungen, und/oder Wasserschleppmitteln, wie z.B. Benzol, Toluol, Xylol und Chlorbenzol, zur azeotropen Destillation des Kondensats durchgeführt werden.

Als Kettenverlängerungsmittel und/oder Vernetzer (c) finden mindestens difunktionelle organische Verbindungen aus der Gruppe der

(ci) primären aromatischen Diamine, deren primäre Aminogruppen gegenüber Polyisocyanaten durch mindestens einen orthoständigen Alkylsubstituenten zu jeder Aminogruppe sterisch behindert sind,

(cii) sekundären aromatischen Diamine und

(ciii) mehrwertigen, vorzugsweise zweiwertigen Alkohole und/oder Polyoxyalkylen-polyole mit Molekulargewichten kleiner als 500, vorzugsweise von 62 bis 300

Verwendung.

Als sterisch gehinderte primäre aromatische Diamine (ci) bewährt haben sich und daher vorzugsweise verwendet werden alkylsubstituierte meta-Phenylendiamine der Formeln

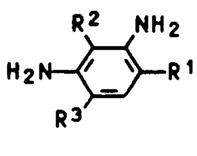

und/oder

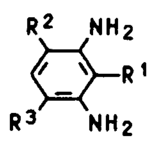

in denen $R^1$ ein Wasserstoffatom oder ein linearer oder verzweigter Alkylrest mit 1 bis 12 Kohlenstoffatomen, vorzugsweise 1 bis 6 Kohlenstoffatomen ist und $R^2$ und $R^3$ gleiche oder verschiedene, lineare oder verzweigte Alkylreste mit 1 bis 4 Kohlenstoffatomen, wie z.B. ein Methyl-, Ethyl-, Propyl-, Isopropyl-, Butyl-

oder sek.-Butylrest sind.

Geeignet sind insbesondere solche Alkylreste R[1], bei denen die Verzweigungsstelle am $C_1$-Kohlenstoffatom sitzt. Neben Wasserstoff seien als Alkylreste R[1] beispielhaft genannt: der Methyl-, Ethyl-, n- und iso-Propyl-, Butyl-, Hexyl-, Octyl-, Decyl-, 1-Methyl-octyl-, 2-Ethyl-octyl-, 1-Methyl-hexyl-, 1,1-Dimethyl-pentyl-, 1,3,3-Trimethyl-hexyl-, 1-Ethyl-pentyl-, 2-Ethyl-pentyl- und vorzugsweise der Cyclohexyl-, 1-Methyl-n-propyl-, tert.-Butyl-, 1-Ethyl-n-propyl-, 1-Methyl-n-butyl- und 1,1-Dimethyl-n-propylrest.

Als alkylsubstituierte m-Phenylendiamine kommen beispielsweise in Betracht: 2,4-Dimethyl-, 2,4-Diethyl-, 2,4-Diisopropyl-, 2,4-Diethyl-6-methyl-, 2-Methyl-4,6-diethyl-, 2,4,6-Triethyl-, 2,4-Dimethyl-6-cyclohexyl-, 2-Cyclohexyl-4,6-diethyl-, 2-Cyclohexyl-4,6-diisopropyl-, 2,4-Dimethyl-6-(1-ethyl-n-propyl)-, 2,4-Dimethyl-6-(1,1-dimethyl-n-propyl)- und 2-(1-Methyl-n-butyl)-4,6-dimethyl-phenylendiamin-1,3.

Bewährt haben sich ferner alkylsubstituierte Diamino-diphenylmethane, wie z.B. 3,3'-di- und 3,3',5,5'-tetra-n-alkylsubstituierte 4,4'-Diamino-diphenylmethane wie z.B. 3,3'-Diethyl-, 3,3',5,5'-Tetraethyl- und 3,3',5,5'-Tetra-n-propyl-4,4'-diamino-diphenylmethan.

Anwendung finden vorteilhafterweise Diamino-diphenylmethane der Formel

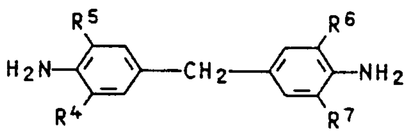 ,

in der $R^4$, $R^5$, $R^6$ und $R^7$ gleich oder verschieden sind und einen Methyl-, Ethyl-, Propyl-, Isopropyl-, sek.-Butyl- und tert.-Butylrest bedeuten, wobei jedoch mindestens einer der Reste ein Isopropyl- oder sek.-Butylrest sein muß. Die alkylsubstituierten 4,4'-Diamino-diphenylmethane können auch im Gemisch mit Isomeren der Formeln

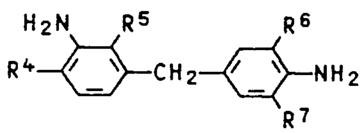 und/oder 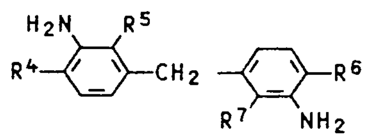

verwendet werden, wobei $R^4$, $R^5$, $R^6$ und $R^7$ die obengenannte Bedeutung haben.

Beispielhaft genannt seien: 3,3′,5-Trimethyl-5′-isopropyl-, 3,3′,5-Triethyl-5′-isopropyl-, 3,3′,5-Trimethyl-5′-sek.-butyl-, 3,3′,5-Triethyl-5′-sek.-butyl-4,4′-diamino-diphenylmethan, 3,3′-Dimethyl-5,5′-diisopropyl-,3,3′-Diethyl-5,5′-diisopropyl-, 3,3′-Dimethyl-5,5′-di-sek.-butyl-, 3,3′-Diethyl-5,5′-di-sek.-butyl-, 3,5-Dimethyl-3′,5′-diisopropyl-, 3,5-Diethyl-3′,5′-diisopropyl-, 3,5-Dimethyl-3′,5′-di-sek.-butyl-, 3,5-Diethyl-3′,5′-di-sek.-butyl-4,4′-diamino-diphenylmethan, 3-Methyl-3′,5,5′-triisopropyl-, 3-Ethyl-3′,5,5′-triisopropyl-, 3-Methyl-3′,5,5′-tri-sek.-butyl-, 3-Ethyl-3′,5,5′-tri-sek.-butyl-4,4-diamino-diphenylmethan, 3,3′-Diisopropyl-5,5′-di-sek.-butyl-,3,5-Diisopropyl-3′,5′-di-sek.-butyl-, 3-Ethyl-5-sek.-butyl-3′,5′-diisopropyl-, 3-Methyl-5-tert.-butyl-3′,5′-diisopropyl-, 3-Ethyl-5-sek.-butyl-3′-methyl-5′-tert.-butyl-, 3,3′,5,5′-Tetraisopropyl-und 3,3′,5,5′-Tetra-sek.-butyl-4,4′-d iamino-diphenylmethan.

Vorzugsweise verwendet werden folgende primären aromatischen Diamine: 2,4-Diethyl-, 2,4-Dimethyl-phenylendiamin-1,3, 2,4-Diethyl-6-methyl-,2-Methyl-4,6-diethyl-phenylendiamin-1,3, 2,4,6-Triethyl-phenylendiamin-1,3, 2,4-Dimethyl-6-tert.-butyl-, 2,4-Dimethyl-6-isooctyl- und 2,4-Dimethyl-6-cyclohexyl-phenylendiamin-1,3 sowie 3,5-Dimethyl-3′,5′-diisopropyl- und 3,3′,5,5′-Tetraisopropyl-4,4′-diamino-diphenylmethan.

Die primären aromatischen Diamine (ci) können einzeln oder in Form von Mischungen, beispielsweise aus alkylsubstituierten 1,3-Phenylendiaminen, 3,3′-di- und/oder 3,3′,5,5′-tetraalkylsubstituierten 4,4′-Diamino-diphenylmethanen eingesetzt werden.

Als sekundäre aromatische Diamine (cii) seien beispielhaft genannt: N,N′-dialkylsubstituierte aromatische Diamine, die gegebenenfalls am aromatischen Kern durch Alkylreste substituiert sein können, mit 1 bis 20, vorzugsweise 1 bis 4 Kohlenstoffatomen im N-Alkylrest, wie z.B. N,N′-Diethyl-, N,N′-Di-sek.-pentyl-, N,N′-Di-sek.-hexyl-, N,N′-Di-sek.-decyl-, N,N′-Dicyclohexyl-p- bzw. -m-phenylendiamin, N,N′-Dimethyl-, N,N′-Diethyl-, N,N′-Diisopropyl-, N,N′-Di-sek.-butyl-, N,N′-Dicyclohexyl-4,4′-diamino-diphenylmethan und N,N′-Di-sek.-butyl-benzidin.

Als mehrwertige Alkohole und/oder Polyoxyalkylen-polyole (ciii) kommen beispielsweise in Betracht:

aliphatische und/oder araliphatische Diole mit 2 bis 14, vorzugsweise 2 bis 6 Kohlenstoffatomen, wie Propandiol-1,3, Decandiol-1,10, Diethylenglykol, Dipropylenglykol, Bis-(2-hydroxyethyl)-hydrochinon und vorzugsweise Ethylenglykol, Butandiol-1,4 und Hexandiol-1,6, Triole, wie Glycerin und Trimethylolpropan, und niedermolekulare Polyoxyalkylen-polyole auf Basis Ethylen- und/oder 1,2-Propylenoxid und den vorgenannten Startermolekülen.

Die Kettenverlängerungsmittel und/oder Vernetzer (c) können einzeln oder in Form von Mischungen zugesetzt werden und kommen beim erfindungsgemäßen Verfahren beispielsweise in Mengen von 5 bis 50 Gew.-Teilen, vorzugsweise 10 bis 40 Gew.-Teilen und insbesondere 15 bis 30 Gew.-Teilen, bezogen auf 100 Gew.-Teile der Polyester-diole (b), zur Anwendung. Sofern Mischungen aus sterisch gehinderten primären aromatischen Diaminen (ci) und sek. aromatischen Diaminen (cii) und/oder mehrwertigen Alkoholen (ciii) eingesetzt werden, enthalten diese vorteilhafterweise pro 100 Gew.-Teilen der Komponente (ci) 1 bis 40, vorzugsweise 5 bis 20 Gew.-Teile der Komponente (cii) und/oder (ciii). Als Kettenverlängerungsmittel verwendet werden insbesondere niedermolekulare Diole (ciii) und/oder aromatische Diamine (ci), die in ortho-Stellung zu den Aminogruppen mindestens einen Alkylrest gebunden enthalten.

Als Katalysatoren (d) werden insbesondere Verbindungen verwendet, die die Reaktion der Polyester-diole (b) und gegebenenfalls Hydroxylgruppen enthaltenden Verbindungen der Komponente (ciii) mit den Polyisocyanaten stark beschleunigen. In Betracht kommen organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinn-dilaurat, Dibutylzinn-maleat und Dioctylzinn-diacetat. Die organischen Metallverbindungen werden allein oder vorzugsweise in Kombination mit stark basischen Aminen eingesetzt. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N′,N′-Tetramethylethylendiamin, N,N,N′,N′-Tetramethyl-butandiamin. Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin.

Als Katalysatoren kommen ferner in Betracht: Tris-(dialkylaminoalkyl)-s-hexahydrotriazine, insbesondere Tris-(N,N-dimethylaminopropyl)-s-hexahydrotriazin, Tetraalkylammoniumhydroxide, wie Tetramethylammoniumhydroxid, Alkalihydroxide, wie Natriumhydroxid und Alkalialkoholate, wie Natriummethylat und Kaliumisopropylat sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.%, insbesondere 0,05 bis 2 Gew.% Katalysator bzw. Katalysatorkombination, bezogen auf das Gewicht der Komponente (b).

Zu Treibmitteln (e), welche im erfindungsgemäßen Verfahren gegebenenfalls verwendet werden können, gehört Wasser, das mit Isocyanatgruppen unter Bildung von Kohlendioxid reagiert. Die Wassermengen, die zweckmäßigerweise verwendet werden können, betragen 0,5 bis 2 Gew.%, bezogen auf das Gewicht der Komponente (b).

Andere verwendbare Treibmittel sind niedrigsiedende Flüssigkeiten, die unter dem Einfluß der exothermen Polyadditionsreaktion verdampfen. Geeignet sind Flüssigkeiten, welche gegenüber dem organischen Polyisocyanat inert sind und Siedepunkte unter 100 °C aufweisen. Beispiele derartiger, vorzugsweise verwendeter Flüssigkeiten sind halogenierte Kohlenwasserstoffe, wie Methylenchlorid, Trichlorfluormethan, Dichlordifluormethan, Dichlormonofluormethan, Dichlortetrafluorethan und 1,1,2-Trichlor-1,2,2-trifluorethan.

Auch Gemische dieser niedrigsiedenden Flüssigkeiten untereinander und/oder mit anderen substituierten oder unsubstituierten Kohlenwasserstoffen können verwendet werden.

Die zweckmäßigste Menge an niedrigsiedender Flüssigkeit zur Herstellung von zellhaltigen PU- oder PU-PH-Formkörpern hängt ab von der Dichte, die man erreichen will sowie gegebenenfalls von der Mitverwendung von Wasser. Im allgemeinen liefern Mengen von 0,5 bis 15 Gew.-Teilen, bezogen auf 100 Gew.-Teilen der Komponente (b), zufriedenstellende Ergebnisse.

Der Reaktionsmischung können gegebenenfalls auch noch Hilfsmittel und/oder Zusatzstoffe (f) einverleibt werden. Genannt seien beispielsweise oberflächenaktive Substanzen, innere Formtrennmittel, Schaumstabilisatoren, Zellregler, Füllstoffe, Farbstoffe, Pigmente, Flammschutzmittel, Hydrolyseschutzmittel, fungistatische und bakteriostatisch wirkende Substanzen.

Als oberflächenaktive Substanzen kommen Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin oder stearinsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinussäureester und Türkischrotöl und Zellregler, wie Paraffine, Fettalkohole und Dimethylpolysiloxane. Die oberflächenaktiven Substanzen werden üblicherweise in Mengen von 0,01 bis 5 Gew.-Teilen, bezogen auf 100 Gew.-Teile der Komponente (b), angewandt.

Als innere Formtrennmittel eignen sich beispielsweise Carbonsäureester und/oder Carbonsäureamide, die hergestellt werden durch Veresterung oder Amidierung einer Mischung aus Montansäure und mindestens einer aliphatischen Carbonsäure mit mindestens 10 Kohlenstoffatomen mit mindestens difunktionellen Alkanolaminen, Polyolen und/oder Polyaminen mit Molekulargewichten von 60 bis 400.

Als Füllstoffe, insbesondere verstärkend wirkende Füllstoffe sind die an sich bekannten üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum; Metalloxide, wie Kaolin, Aluminiumoxide, Titanoxide und Eisenoxide, Metallsalze wie Kreide, Schwerspat und anorganische Pigmente, wie Cadmiumsulfid, Zinksulfid sowie Glas, Asbestmehl u.a. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Asbest, Wollastonit und insbesondere Glasfasern verschiedener Länge, die gegebenenfalls geschlichtet sein können. Als organische Füllstoffe kommen beispielsweise in Betracht: Kohle, Melamin, Kollophonium, Cyclopentadienylharze und Pfropfpolymerisate auf Styrol-Acrylnitrilbasis, die durch in situ Polymerisation von Acrylnitril-Styrol-Mischungen in Polyetherolen analog den Angaben der deutschen Patentschriften 1 111 394, 1 222 669 (US 3 304 273, 3 383 351, 3 523 093), 1 152 536 (GB 1 040 452) und 1 152 537 (GB 987 618) hergestellt werden sowie Filler-polyoxyalkylen-polyole, bei denen wäßrige Polymerdispersionen in Polyoxyalkylen-polyoldispersionen übergeführt werden.

Die anorganischen und organischen Füllstoffe können einzeln oder als Gemische verwendet werden. Vorzugsweise Anwendung finden stabile Füllstoff-Polyoxyalkylen-polyol-Dispersionen, bei denen die Füllstoffe in Gegenwart von Polyoxyalkylen-polyolen in situ mit hohen örtlichen Energiedichten auf eine Teilchengröße kleiner als 7 $\mu$m zerkleinert und hierbei gleichzeitig dispergiert werden.

Die anorganischen und organischen Füllstoffe werden der Reaktionsmischung vorteilhafterweise in Mengen von 0,5 bis 50 Gew.%, vorzugsweise 1 bis 40 Gew.%, bezogen auf das Gewicht der Komponenten (a) bis (c), einverleibt.

Geeignete Flammschutzmittel sind beispielsweise Trikresylphosphat, Tris-2-chlorethylphosphat, Trischlorpropylphosphat und Tris-2,3-dibrompropylphosphat.

Außer den bereits genannten halogensubstituierten Phosphaten können auch anorganische Flammschutzmittel, wie Aluminiumoxidhydrat, Antimontrioxid, Arsenoxid, Ammoniumpolyphosphat und Calciumsulfat zum Flammfestmachen der Formkörper verwendet werden. Im allgemeinen hat es sich als zweckmäßig erwiesen, 5 bis 50 Gew.-Teile, vorzugsweise 5 bis 25 Gew.-Teile der genannten Flammschutzmittel für jeweils 100 Gew.-Teile der Komponente (b) zu verwenden.

Nähere Angaben über die obengenannten anderen üblichen Hilfs- und Zusatzstoffe sind der Fachliteratur, beispielsweise der Monographie von J.H. Saunders und K.C. Frisch "High Polymers", Band XVI, Polyurethanes, Teil 1 und 2, Verlag Interscience Publishers 1962 bis 1964, zu entnehmen.

Zur Herstellung der gegebenenfalls zelligen PU- oder PU-PH-Formkörper werden die organischen Polyisocyanate (a), Polyester-diole (b) und Kettenverlängerungsmittel und/oder Vernetzer (c) in solchen Mengen zur Umsetzung gebracht, daß das Äquivalenz-Verhältnis von NCO-Gruppen der Polyisocyanate (a) zur Summe der reaktiven Wasserstoffatome der Komponenten (b) und (c) 1:0,85 bis 1,15, vorzugsweise 1:0,95 bis 1,15 beträgt.

Die Herstellung der kompakten und vorzugsweise zellhaltigen Formkörper erfolgt nach dem Prepolymer-Verfahren oder vorzugsweise nach dem one shot-Verfahren, wobei PU-Formkörper zweckmäßigerweise mit Hilfe der Niederdrucktechnik und PU-PH-Formkörper mit Hilfe der Reaktionsspritzguß-Technik hergestellt werden.

Diese Verfahrenstechniken werden z.B. beschrieben von Piechota und Röhr in "Integralschaumstoff", Carl-Hanser-Verlag, München, Wien 1975; D.J. Prepelka und J.L. Wharton in Journal of Cellular Plastics, März/April 1975, Seiten 87 bis 98 und U. Knipp in Journal of Cellular Plastics, März/April 1973, Seiten 76 bis 84.

Bei Verwendung einer Mischkammer mit mehreren Zulaufdüsen können die Ausgangskomponenten einzeln zugeführt und in der Mischkammer intensiv vermischt werden. Als besonders vorteilhaft hat es sich erwiesen, nach dem Zweikomponenten-Verfahren zu arbeiten und die Kettenverlängerungsmittel und/oder Vernetzer (c) und Katalysatoren (d) in den Polyester-diolen (b) zu lösen und gegebenenfalls mit Treibmittel

(e), Hilfsmitteln und/oder Zusatzstoffen (f) in der Komponente (A) zu vereinigen und als Komponente (B) die organischen, gegebenenfalls modifizierten Polyisocyanate zu verwenden. Vorteilhaft ist hierbei beispielsweise, daß die Komponenten (A) und (B) getrennt gelagert und raumsparend transportiert werden können und bei der Verarbeitung nur noch in den entsprechenden Mengen gemischt werden müssen.

Die Menge des in das Formwerkzeug eingebrachten Reaktionsgemisches wird so bemessen, daß die erhaltenen kompakten Formkörper eine Dichte von 1,0 bis 1,4 g/cm$^3$, vorzugsweise von 1,0 bis 1,2 g/cm$^3$ und die zellhaltigen Formkörper eine Dichte von 0,2 bis 1,1 g/cm$^3$ aufweisen, wobei die mikrozellularen Formkörper vorzugsweise eine Dichte von 0,8 bis 1,0 g/cm$^3$, Schuhsohlen vorzugsweise eine Dichte von 0,4 bis 0,65 g/cm$^3$ und Schaumstoffe vorzugsweise eine Dichte von 0,25 bis 0,4 g/cm$^3$ besitzen. Die Ausgangskomponenten werden mit einer Temperatur von 15 bis 80 °C, vorzugsweise 20 bis 60 °C und insbesondere 25 bis 55 °C in das Formwerkzeug eingebracht. Die Formwerkzeugtemperatur beträgt zweckmäßigerweise 20 bis 100 °C, vorzugsweise 30 bis 80 °C. Die Verdichtungsgrade zur Herstellung der mikrozellularen oder zellhaltigen Formkörper liegen zwischen 1,1 und 8, vorzugsweise zwischen 2 und 8.

Die nach dem erfindungsgemäßen Verfahren erhaltenen kompakten bzw. zellularen PU- bzw- PU-PH-Formkörper eignen sich insbesondere zur Verwendung in der Automobilindustrie, beispielsweise als Stoßstangenabdeckungen, Rammschutzleisten und Karosserieteile wie Regenrinnen, Kotflügel, Spoiler und Radkästenverbreiterungen sowie als technische Gehäuseteile, Laufrollen und Schuhsohlen. Die Schaumstoffe finden beispielsweise als Armlehnen, Kopfstützen, Sicherheitsabdeckungen im Automobilinnenraum sowie als Motorrad- und Fahrradsättel und Deckschichten in Verbundschaumstoffen Anwendung.

Die in den Beispielen genannten Teile beziehen sich auf das Gewicht.

Herstellung der erfindungsgemäß verwendbaren Polyester-diole

Polyester-diol I

36,8 Teile Adipinsäure und 72,25 Teile eines Polyoxytetramethylen-glykolgemisches mit einer durchschnittlichen OH-Zahl von 464, entsprechend einem Molekulargewicht von 241,8, wurden gemischt. Unter Rühren bei Normaldruck und Abdestillieren des Kondensationswassers wurde die Reaktionsmischung stetig auf eine Temperatur bis zu 220 °C erwärmt und hierbei verestert. Gegen Ende der Veresterung wurde der Druck bis auf ungefähr 10 mbar reduziert. Nach Abtrennung von ungefähr 9,1 Teilen Destillat erhielt man ein bei Raumtemperatur flüssiges Polyester-diol mit folgenden Kennzahlen:

| | |
|---|---|
| OH-Zahl: | 56,3 |
| Säurezahl: | 0,8 |
| Viskosität bei 25 °C: | 3.320 mPa.s |
| Viskosität bei 75 °C: | 320 mPa.s |

Polyester-diol II

48,9 Teile Adipinsäure, 45,9 Teile eines Polyoxytetramethylen-glykolgemisches mit einer durchschnittlichen OH-Zahl von 469, entsprechend einem Molekulargewicht von 239,2, und 17,3 Teile 1,4-Butandiol wurden analog der oben beschriebenen Herstellweise für das Polyester-diol I verestert. Man erhielt ein Polyester-diol mit folgenden Kennzahlen:

| | |
|---|---|
| OH-Zahl: | 56,3 |
| Säurezahl: | 0,7 |
| Viskositat bei 25 °C: | 4.410 mPa.s |
| Viskosität bei 75 °C: | 441 mPa.s |

Vergleichspolyester-diol

73,49 Teile Adipinsäure, 33,2 Teile 1,4-Butandiol und 11,4 Teile Ethylenglykol wurden analog der oben beschriebenen Herstellungsweise für das Polyester-diol I verestert. Als Destillat wurden 18,1 Teile Wasser abgetrennt.

Das bei Raumtemperatur feste Polyester-diol besaß folgende Kennzahlen:

| | |
|---|---|
| OH-Zahl: | 56,5 |
| Säurezahl: | 0,5 |
| Viskositat bei 25 °C: | - |
| Viskositat bei 75 °C: | 693 mPa.s |

Beispiel 1

Komponente A:

Mischung aus

| | |
|---|---|
| 82,83 Teilen | Polyester-diol I, |
| 8,95 Teilen | Ethylenglykol, |
| 3,68 Teilen | Antistatikum (®Catafor CA 100), |
| 1,00 Teilen | einer 33 gew.-%igen Lösung von Triethylendiamin in Ethylenglykol, |
| 0,16 Teilen | Silikonöl (Dow Corning 193), |
| 1,80 Teilen | Trichlor-trifluorethan und |
| 0,27 Teilen | Wasser |

Komponente B:

Quasi-prepolymer mit einem NCO-Gehalt von 19 Gew.%, hergestellt durch Verflüssigung von 4,4'-Diphenylmethan-diisocyanat mit einem 1,4-Butandiol-polyadipat mit der OH-Zahl von 56.

100 Teile der Komponente A und

a) 92 Teile
b) 93 Teile und
c) 94 Teile

der Komponente B wurden auf 45°C erwärmt und mit Hilfe einer Niederdruckmaschine vom Typ F 20 der Elastogran-Maschinenbau GmbH in einer auf 50°C temperierten Aluminiumform mit den Innenabmessungen 200 x 200 x 10 mm zu Formplatten mit der Dichte 0,65 g/cm$^3$ umgesetzt.

Die an den Formplatten vor und nach dem Hydrolysetest (1 Woche gelagert bei 70°C und 100 % relativer Luftfeuchtigkeit) gemessenen mechanischen Eigenschaften sind in der Tabelle 1 zusammengefaßt.

Beispiel 2

Komponente A:

Mischung aus

| | |
|---|---|
| 82,83 Teilen | Polyester-diol II, |
| 8,95 Teilen | Ethylenglykol, |
| 3,68 Teilen | Antistatikum (®Catafor CA 100), |
| 1,00 Teilen | einer 33 gew.-%igen Lösung von Triethylendiamin in Ethylenglykol, |
| 0,16 Teilen | Silikonöl (Dow Corning 193), |
| 1,80 Teilen | Trichlor-trifluorethan und |
| 0,27 Teilen | Wasser |

Komponente B: analog Beispiel 1

100 Teile der Komponente A und

a) 93 Teile
b) 94 Teile und
c) 95 Teile

der Komponente B wurden analog den Angaben von Beispiel 1 zu Formplatten der Dichte 0,65 g/cm$^3$ umgesetzt.

Die an den Formplatten vor und nach dem Hydrolysetest (1 Woche gelagert bei 70°C und 100 % relativer Luftfeuchtigkeit) gemessenen mechanischen Eigenschaften sind in der Tabelle 2 zusammengefaßt.

Vergleichsbeispiel

Komponente A:

Mischung aus

| | |
|---|---|
| 84,33 Teilen | Vergleichspolyester-diol, |
| 8,95 Teilen | Ethylenglykol, |

| | |
|---|---|
| 3,68 Teilen | Antistatikum (®Catafor CA 100), |
| 1,00 Teilen | einer 33 gew.-%igen Lösung von Triethylendiamin in Ethylenglykol, |
| 0,16 Teilen | Silikonöl (Dow Corning 193), |
| 1,80 Teilen | Trichlor-trifluorethan und |
| 0,08 Teilen | Wasser |

Komponente B: analog Beispiel 1

100 Teile der Komponente A und

a) 92 Teile

b) 93 Teile und

c) 94 Teile

der Komponente B wurden analog den Angaben von Beispiel 1 zu Formplatten der Dichte 0,65 $g/cm^3$ umgesetzt.

Die an den Formplatten vor und nach dem Hydrolysetest (1 Woche bei 70°C und 100 % relativer Luftfeuchtigkeit) gemessenen mechanischen Eigenschaften sind in der Tabelle 3 zusammengefaßt.

Tabelle 1

| Beispiel 1 | | a | a nach Hydrolyse | b | b nach Hydrolyse | c | c nach Hydrolyse |
|---|---|---|---|---|---|---|---|
| Shore A-Härte nach DIN 53 505 | | 75 | - | 78 | - | 78 | - |
| Reißfestigkeit nach DIN 53 504 | [N/mm$^2$] | 8,2 | 5,50 | 9,0 | 7,0 | 9,5 | 8,0 |
| Reißdehnung nach DIN 53 504 | [%] | 418 | 470 | 411 | 495 | 402 | 505 |
| Weiterreißfestigkeit nach Graves gemäß DIN 53 515 | [N/mm$^2$] | 12,8 | 12,6 | 12,2 | 13,9 | 11,9 | 15,0 |
| Dauerbiegeverfahren in Anlehnung an DIN 53 222 [n. 30 000] | | i.O. | Bruch | i.O. | i.O. | i.O. | i.O. |

Tabelle 2

| Beispiel 2 | | a | | b | | c | |
|---|---|---|---|---|---|---|---|
| | | | nach Hydrolyse | | nach Hydrolyse | | nach Hydrolyse |
| Shore A-Härte nach DIN 53 505 | | 75 | - | 75 | - | 76 | - |
| Reißfestigkeit nach DIN 53 504 | [N/mm²] | 8,2 | 3,2 | 8,6 | 5,8 | 9,3 | 6,9 |
| Reißdehnung nach DIN 53 504 | [%] | 474 | 365 | 431 | 517 | 402 | 510 |
| Weiterreißfestigkeit nach Graves gemäß DIN 53 515 | [N/mm²] | 11,3 | - | 11,3 | - | 9,5 | - |
| Dauerbiegeverfahren in Anlehnung an DIN 53 222 [n. 30 000] | | i.O. | Bruch | i.O. | i.O. | i.O. | i.O. |

Tabelle 3

| Vergleichsbeispiel | | a | a nach Hydrolyse | b | b nach Hydrolyse | c | c nach Hydrolyse |
|---|---|---|---|---|---|---|---|
| Shore A-Härte nach DIN 53 505 | | 75 | - | 75 | - | 77 | - |
| Reißfestigkeit nach DIN 53 504 | [N/mm$^2$] | 10,8 | 6,7 | 10,4 | 7,5 | 10,7 | 7,8 |
| Reißdehnung nach DIN 53 504 | [%] | 423 | 475 | 393 | 441 | 385 | 427 |
| Weiterreißfestigkeit nach Graves gemäß DIN 53 515 | [N/mm$^2$] | 10,3 | - | 9,8 | - | 8,8 | - |
| Dauerbiegeverfahren in Anlehnung an DIN 53 222 [n. 30 000] | | i.O. | Bruch | i.O. | Bruch | Bruch | > 9 |

## Patentansprüche

1. Verfahren zur Herstellung von elastischen, kompakten oder zelligen Polyurethan- oder Polyurethan-Polyharnstoff-Formkörpern durch Umsetzung von
   a) organischen Polyisocyanaten,
   b) höhermolekularen Polyesterolen,
   c) Kettenverlängerungsmitteln und/oder Vernetzern

in Gegenwart von
d) Katalysatoren und gegebenenfalls
e) Treibmitteln
f) Hilfsmitteln und/oder Zusatzstoffen

dadurch gekennzeichnet, daß man als Polyesterole (b) Polyester-diole mit einer Hydroxylzahl von 25 bis 100 und einer Säurezahl kleiner als 2 verwendet, die hergestellt werden durch Polykondensation von organischen Dicarbonsäuren und mindestens einem Polyoxytetramethylenglykol mit einem Molekulargewicht von 162 bis 600.

2. Verfahren nach Anspruch 1, dadurch gekennzeichnet, daß die Polyesterdiole hergestellt werden durch Polykondensation von organischen Dicarbonsäuren und einer Mischung aus mindestens einem Polyoxytetramethylen-glykol mit einem Molekulargewicht von 162 bis 600 und mindestens einem aliphatischen Diol mit 2 bis 12 C-Atomen im Alkylenrest und/oder Polyoxyalkylenglykol aus der Gruppe der Polyoxyethylen-glykole, Polyoxypropylen-glykole und/oder Polyoxypropylen-polyoxyethylen-glykole mit einem Molekulargewicht von 106 bis 1000.

3. Verfahren nach Anspruch 1, dadurch gekennzeichnet, daß die Polyesterdiole hergestellt werden durch Polykondensation von

| | |
|---|---|
| 10 bis 70 | Gew.-Teilen mindestens einer organischen Dicarbonsäure, |
| 1 bis 90 | Gew.-Teilen mindestens eines Polyoxytetramethylen-glykols mit einem Molekulargewicht von 162 bis 600 und |
| 0 bis 50 | Gew.-Teilen mindestens eines aliphatischen Diols mit 2 bis 12 C-Atomen und/oder eines Polyoxyalkylen-glykols aus der Gruppe der Polyoxyethylen-glykole, Polyoxypropylen-glykole und/oder Polyoxypropylen-polyoxyethylen-glykole mit einem Molekulargewicht von 106 bis 1000. |

4. Verfahren nach Anspruch 1, dadurch gekennzeichnet, daß als organische Dicarbonsäure Adipinsäure, Glutarsäure und/oder Bernsteinsäure verwendet werden.

5. Verfahren nach Anspruch 1, dadurch gekennzeichnet, daß zur Herstellung der Polyester-diole Polyoxytetramethylen-glykolmischungen mit durchschnittlichen Molekulargewichten von 200 bis 300 verwendet werden.

6. Verfahren nach Anspruch 1, dadurch gekennzeichnet, daß die Polyester-diole hergestellt werden durch Polykondensation von Adipinsäure und mindestens einem Polyoxytetramethylen-glykol mit Molekulargewichten von 200 bis 300 oder einer Mischung aus mindestens einem Polyoxytetramethylen-glykol mit einem Molekulargewicht von 200 bis 300 und einem Alkandiol, vorzugsweise Butandiol-1,4.

7. Verfahren nach Anspruch 1, dadurch gekennzeichnet, daß die Polyester-diole hergestellt werden durch Polykondensation von

| | |
|---|---|
| 20 bis 50 | Gew.-Teilen Adipinsäure, |
| 10 bis 90 | Gew.-Teilen mindestens eines Polyoxytetramethylen-glykols mit einem Molekulargewicht von 200 bis 300 und |
| 0 bis 50 | Gew.-Teilen Butandiol-1,4. |

8. Verfahren nach Anspruch 1, dadurch gekennzeichnet, daß man als Kettenverlängerungsmittel (c) niedermolekulare Diole und/oder aromatische Diamine, die in ortho-Stellung zu den Aminogruppen mindestens einen Alkylrest gebunden enthalten, verwendet.

9. Verfahren nach Anspruch 1, dadurch gekennzeichnet, daß man als organische Polyisocyanate Quasiprepolymere mit einem NCO-Gehalt von 15 bis 30 Gew.%, bezogen auf das Gesamtgewicht, verwendet, die hergestellt werden durch Umsetzung von 4,4'-Diphenylmethan-diisocyanat mit mindestens einem Polyesterdiol mit einer Hydroxylzahl von 30 bis 300 oder einer Mischung aus einem Polyesterdiol mit einer Hydroxylzahl von 30 bis 300 und mindestens einem Alkandiol mit 2 bis 12 Kohlenstoffatomen im Alkylenrest.

**Claims**

1. A process for the production of elastic, compact or cellular polyurethane or polyurethane-polyurea moldings by reacting
   a) organic polyisocyanates,
   b) relatively high-molecular-weight polyesterols,
   c) chain extenders and/or crosslinking agents, in the presence of
   d) catalysts and, if desired,
   e) blowing agents,
   f) assistants and/or additives,

   wherein the polyesterols (b) are polyesterdiols having a hydroxyl number of 25 to 100 and an acid number of less than 2, which are prepared by polycondensing organic dicarboxylic acids and at least one polyoxytetramethylene glycol having a molecular weight of from 162 to 600.

2. A process as claimed in claim 1, wherein the polyesterdiols are prepared by polycondensing organic dicarboxylic acids and a mixture of at least one polyoxytetramethylene glycol having a molecular weight of from 162 to 600 and at least one aliphatic diol having 2 to 12 carbon atoms in the alkylene radical and/or polyoxyalkylene glycol from the group consisting of polyoxyethylene glycols, polyoxypropylene glycols and/or polyoxypropylene polyoxyethylene glycols having a molecular weight of from 106 to 1000.

3. A process as claimed in claim 1, wherein the polyesterdiols are prepared by polycondensing

| | |
|---|---|
| from 10 to 70 | parts by weight of at least one organic dicarboxylic acid, |
| from 1 to 90 | parts by weight of at least one polyoxytetramethylene glycol having a molecular weight of from 162 to 600 and |
| from 0 to 50 | parts by weight of at least one aliphatic diol having 2 to 12 carbon atoms and/or at least one polyoxyalkylene glycol from the group consisting of polyoxyethylene glycols, polyoxypropylene glycols and/or polyoxypropylene polyoxyethylene glycols having a molecular weight of from 106 to 1000. |

4. A process as claimed in claim 1, wherein the organic dicarboxylic acid used is adipic acid, glutaric acid and/or succinic acid.

5. A process as claimed in claim 1, wherein the polyesterdiols are prepared using polyoxytetramethylene glycol mixtures having a mean molecular weight of from 200 to 300.

6. A process as claimed in claim 1, wherein the polyesterdiols are prepared by polycondensing adipic acid and at least one polyoxytetramethylene glycol having a molecular weight of from 200 to 300 or a mixture of at least one polyoxytetramethylene glycol having a molecular weight of from 200 to 300 and an alkanediol, preferably 1,4-butanediol.

7. A process as claimed in claim 1, wherein the polyesterdiols are prepared by polycondensing

| | |
|---|---|
| from 20 to 50 | parts by weight of adipic acid, |
| from 10 to 90 | parts by weight of at least one polyoxytetramethylene glycol having a molecular weight of from 200 to 300 and |
| from 0 to 50 | parts by weight of 1,4-butanediol. |

8. A process as claimed in claim 1, wherein the chain extenders (c) are low-molecular-weight diols and/or aromatic diamines which contain at least one alkyl radical in the ortho-position to the amino groups.

9. A process as claimed in claim 1, wherein the organic polyisocyanates used are quasi-prepolymers having an NCO content of from 15 to 30% by weight, based on the total weight, which are prepared by reacting 4,4'-diphenylmethane diisocyanate with at least one polyesterdiol having a hydroxyl number of from 30 to 300 or a mixture of a polyesterdiol having a hydroxyl number of from 30 to 300 and at least one alkanediol having 2 to 12 carbon atoms in the alkylene radical.

## Revendications

1. Procédé de préparation d'articles moulés en polyuréthanne ou en polyuréthanne-polyurée, cellulaires ou compacts, élastiques, par la réaction

a) de polyisocyanates organiques,
b) de polyestérols de poids moléculaires élevés,
c) d'agents de réticulation et/ou d'agents d'allongement des chaînes,
en présence
d) de catalyseurs et, éventuellement,
e) d'agents porogènes,
f) d'adjuvants et/ou d'additifs,

caractérisé en ce que l'on utilise, à titre de polyestérols (b), des polyesterdiols d'un indice d'hydroxyle de 25 à 100 et d'un indice d'acidité inférieur à 2, que l'on prépare par la polycondensation d'acides dicarboxyliques organiques et d'au moins un polyoxytétraméthylèneglycol d'un poids moléculaire de 162 à 600.

**2.** Procédé suivant la revendication 1, caractérisé en ce que l'on prépare les polesterdiols par la polycondensation d'acides dicarboxyliques organiques et d'un mélange d'au moins un polyoxytétraméthylèneglycol d'un poids moléculaire de 162 à 600 et d'au moins un diol aliphatique dont le radical alkylène comporte de 2 à 12 atomes de carbone et/ou d'un polyoxyalkylèneglycol appartenant au groupe des polyoxyéthylèneglycols, des polyoxypropylèneglycols et/ou des polyoxypropylènepolyoxyéthylèneglycols d'un poids moléculaire de 106 à 1.000.

**3.** Procédé suivant la revendication 1, caractérisé en ce que l'on prépare les polyesterdiols par la polycondensation de

| | |
|---|---|
| 10 à 70 parties | en poids d'au moins un acide dicarboxylique organique, |
| 1 à 90 parties | en poids d'au moins un polyoxytétraméthylèneglycol d'un poids moléculaire de 162 à 600 et |
| 0 à 50 parties | en poids d'au moins un diol aliphatique comportant de 2 à 12 atomes de carbone et/ou d'un polyoxyalkylèneglycol appartenant au groupe des polyoxyéthylèneglycols, des polyoxypropylèneglycols et/ou des polyoxypropylènepolyoxyéthylèneglycols d'un poids moléculaire de 106 à 1.000. |

**4.** Procédé suivant la revendication 1, caractérisé en ce qu'à titre d'acides dicarboxyliques organiques, on utilise l'acide adipique, l'acide glutarique et/ou l'acide succinique.

**5.** Procédé suivant la revendication 1, caractérisé en ce qu'en vue de la préparation des polyesterdiols, on utilise des mélanges de polyoxytétraméthylèneglycols possédant des poids moléculaires moyens de 200 à 300.

**6.** Procédé suivant la revendication 1, caractérisé en ce que l'on prépare les polyesterdiols par la polycondensation de l'acide adipique et d'au moins un polyoxytétraméthylèneglycol possédant un poids moléculaire de 200 à 300, ou d'un mélange d'au moins un polyoxytétraméthylèneglycol d'un poids moléculaire de 200 à 300 et d'un alcanediol, de préférence le butanediol-1,4.

**7.** Procédé suivant la revendication 1, caractérisé en ce que l'on prépare les polyesterdiols par la polycondensation de

| | |
|---|---|
| 20 à 50 parties | en poids d'acide adipique, |
| 10 à 90 parties | en poids d'au moins un polyoxytétraméthylèneglycol d'un poids moléculaire de 200 à 300 et |
| 0 à 50 parties | en poids de butanediol-1,4. |

**8.** Procédé suivant la revendication 1, caractérisé en ce que l'on utilise, à titre d'agent d'allongement des chaînes (c), des diamines aromatiques et/ou des diols de faible poids moléculaire, où les diamines contiennent au moins un radical alkyle lié en position ortho par rapport aux radicaux amino.

**9.** Procédé suivant la revendication 1, caractérisé en ce qu'à titre de polyisocyanates organiques, on utilise des quasi-prépolymères d'une teneur en NCO de 15 à 30% en poids, par rapport au poids total, que l'on prépare par la réaction de diisocyanate de 4,4'-diphénylméthane et d'au moins un polyesterdiol d'un indice d'hydroxyle de 30 à 300, ou d'un mélange d'un polyesterdiol d'un indice d'hydroxyle de 30 à 300 et d'au moins un alcanediol dont le radical alkylène comporte de 2 à 12 atomes de carbone.